# EUROPÄISCHE PATENTSCHRIFT

(11) **EP 2 872 816 B1**
(45) Veröffentlichungstag und Bekanntmachung des Hinweises auf die Patenterteilung: **29.08.2018**
(21) Anmeldenummer: 13732541.1
(22) Anmeldetag: 01.07.2013
(51) Int. Cl.: F16M 11/08

(54) **TRAGARMANSCHLUSS**
SUPPORT ARM CONNECTION
RACCORD DE BRAS DE SUPPORT

(30) Priorität: 10.07.2012 AT 502762012
(43) Veröffentlichungstag der Anmeldung: 20.05.2015
(73) Patentinhaber: B&R Industrial Automation GmbH, 5142 Eggelsberg (AT)
(72) Erfinder: ESTERBAUER, Hermann, A-5121 Tarsdorf (AT)
(74) Vertreter: Patentanwälte Pinter & Weiss OG
(86) Internationale Anmeldenummer: PCT/EP2013/063767
(87) Internationale Veröffentlichungsnummer: WO 2014/009188

(56) Entgegenhaltungen:
- EP-A1- 0 496 191
- EP-A1- 2 325 541
- EP-A2- 2 096 349
- US-A- 2 602 990
- US-A- 4 088 291

## Beschreibung

Die gegenständliche Erfindung betrifft einen Tragarmanschluss mit einem Tragarm und einer Tragarmaufnahme, in die der Tragarm gesteckt ist und die im bestimmungsgemäßen Einsatz an einem Bauteil angeordnet ist.

Im industriellen Umfeld, z.B. bei Fertigungsmaschinen, Steuerpulten, etc., werden Ein- und Ausgabegeräte in Form von Bedienfeldern verwendet, wobei die Bedienfelder oftmals auf Tragarmen befestigt werden, die eine bestimmte Verstellbarkeit der Position des Bedienfeldes erlauben. Bekannte Tragarmsysteme sind entweder aufwendig im Aufbau, benötigen einen großen Bauraum oder bieten nur eine eingeschränkte Bewegungsfreiheit.

Dazu zeigt die EP 0 496 191 A1 Geräteträgerkupplung für ein, an einem vertikal ausgerichteten Tragrohr, drehbar aufgehängtes Gerät. Die EP 2 325 541 A1 und die EP 2 096 349 A2 zeigen Montagemöglichkeiten für ein Stützelement beziehungsweise einen oder mehrere Ausleger. Die US 2 602 990 A zeigt eine Hub/Schwenksäule welche dazu genutzt wird, um entsprechende Werkstücke in eine komfortable Arbeitslage bringen zu können. Die US 4 088 291 A zeigt eine Einrichtung die es erlaubt wissenschaftliche Instrumente möglichst präzise zu positionieren, wobei dabei auf einem Schaft eine Geräteaufnahme drehbar angeordnet wird.

Es ist daher eine Aufgabe der gegenständlichen Erfindung, einen Tragarmanschluss möglichst einfach auszuführen, aber dabei gleichzeitig ein schlankes Design und hohe Bewegungsfreiheit zu erreichen.

Diese Aufgabe wird erfindungsgemäß dadurch gelöst, indem am Tragarm ein Gehäusering und ein Tragarmring angeordnet sind, wobei der Gehäusering vom axialen Ende des Tragarmes weiter entfernt als der Tragarmring angeordnet ist und in der Tragarmaufnahme befestigt ist und der Tragarmring am Tragarm befestigt ist und in der Tragarmaufnahme eine radial nach innen vorspringende Schulter vorgesehen ist, die einen axialen Anschlag für den Tragarmring ausbildet. Auf diese Weise kann mit sehr wenigen, einfachen Komponenten ein Tragarmanschluss realisiert werden, der einfach aufgebaut ist, der flexibel eingesetzt werden kann, der sehr kompakt aufgebaut ist und der trotzdem einen großen Schwenkbereich ermöglicht.

Wenn am Tragarmring eine axial vorspringende Nase vorgesehen ist, die in eine axiale Ausnehmung an der Schulter eingreift, kann sehr einfach ein Schwenkbereich des Tragarmes in der Tragarmaufnahme definiert werden.

Eine bestimmte Position des Tragarmes in der Tragarmaufnahme kann auf einfache und schnelle Weise fixiert werden, wenn an der Tragarmaufnahme ein Arretiermittel zur Lagefixierung des Tragarmes in der Tragarmaufnahme vorgesehen ist.

Die gegenständliche Erfindung wird nachfolgend unter Bezugnahme auf die Figuren 1 bis 3, die beispielhaft und nicht einschränkend vorteilhafte Ausgestaltungen der Erfindung zeigen, näher erläutert. Dabei zeigt
Fig.1 ein Bedienfeld mit einem erfindungsgemäßen Tragarmanschluss in einer Vorder- und Rückansicht,
Fig.2 ein Schnitt durch einen erfindungsgemäßen Tragarmanschluss im montierten Zustand und
Fig.3 einen Schnitt durch einen erfindungsgemäßen Tragarmanschluss im geteilten Zustand.

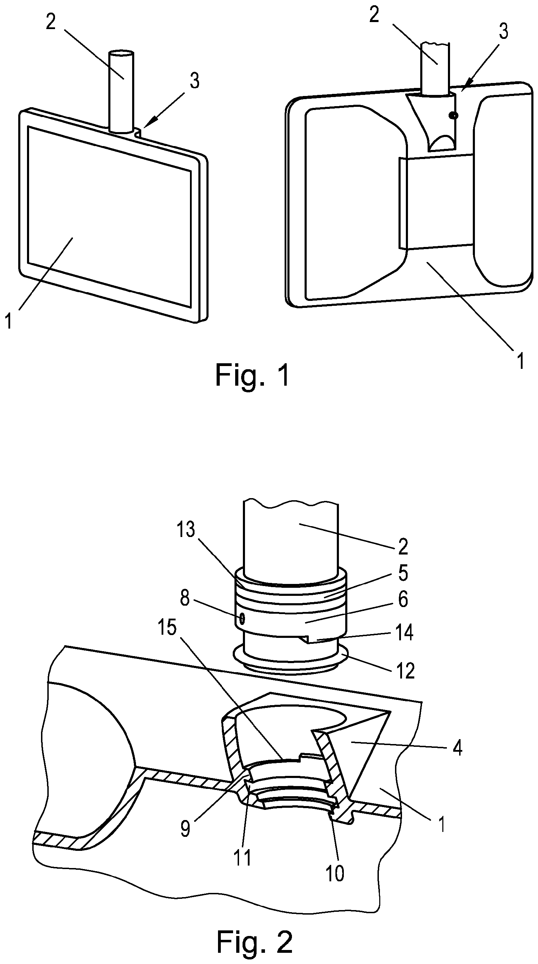

In Fig.1 ist ein Bedienfeld 1 von vorne und von hinten dargestellt. Das Bedienfeld 1 ist mittels eines erfindungsgemäßen Tragarmanschlusses 3 an einem Tragarm 2 befestigt. Selbstverständlich könnte anstelle eines Bedienfeldes 1 auch jedes andere Bauteil am Tragarm 2 befestigt sein. Beispielhaft wird die Erfindung nachfolgend anhand eines Bedienfeldes 1 erläutert.

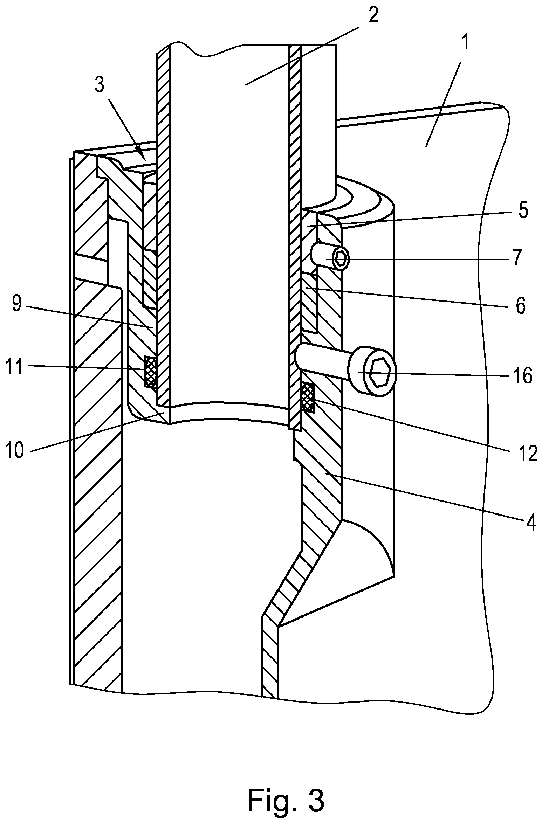

Der Tragarmanschluss 3 besteht aus einem Tragarm 2 und einer Tragarmaufnahme 4 (Fig.2). Der Tragarm 2 kann als Rundrohr ausgeführt sein, wobei ein Ende des Tragarmes 2 in die Tragarmaufnahme 4 gesteckt ist (Fig.3) und darin mit einem eigenen Mechanismus gehalten wird. Das andere Ende des Tragarms 2, hier nicht gezeigt, kann an einem beliebigen Ort, wie z.B. an einer Maschine oder an einer Wand, befestigt sein. Die Tragarmaufnahme 4 ist hier hülsenförmig am Gehäuse des Bedienfeldes 1 angeformt, kann aber auch beliebig anders ausgeführt und angeordnet sein, wie z.B. als separater Bauteil, der am Bedienfeld befestigt wird, oder als Teil eines Schwenkgelenks (z.B. einer bekannten VESA-Halterung).

Zumindest der Teil des Tragarmes 2, der in die Tragarmaufnahme 4 gesteckt ist, ist kreiszylinderförmig ausgeführt, um ein Verschwenken des Bedienfeldes 1 um die Längsachse des Tragarmes 2 zu ermöglichen. Am axialen Ende des Tragarmes 2 sind zwei Montageringe axial nebeneinander, vorzugsweise axial aneinander anliegend, angeordnet, wobei der Gehäusering 5 weiter vom axialen Ende des Tragarmes 2 angeordnet ist, als der Tragarmring 6. Der Gehäusering 5 wird mit der Tragarmaufnahme 4 verbunden, z.B. mittels in der Tragarmaufnahme 4 geschraubten Wurmschrauben 7 geklemmt, wie in Fig.3 gezeigt. Der Tragarmring 6 ist am Tragarm 2 befestigt, z.B. mittels im Tragarmring 6 geschraubten Wurmschrauben 8 geklemmt. In der Tragaufnahme 4 ist eine radial nach innen vorstehende Schulter 9 vorgesehen, deren Innendurchmesser bevorzugt in etwa dem Außendurchmesser des Tragarmes 2 entspricht, um den Tragarm 2 in der Tragarmaufnahme 4 zu führen. Die Schulter 9 bildet einen axialen Anschlag für den Tragarmring 6, der im montierten Zustand mit seiner der Schulter 9 zugewandten axialen Stirnfläche bevorzugt an der Schulter 9 anliegt. Gehäusering 5, Tragarmring 6 und Schulter 9 wirken damit derart zusammen, dass einerseits verhindert wird, dass das Bedienfeld 1 vom Tragarm 2 abgehoben werden kann (falls das Bedienfeld 1 von oben auf den Tragarm 2 aufgesteckt ist) oder von diesem herunterfällt, und dass andererseits sichergestellt wird, dass der Tragarm 2 nicht aus der Tragarmaufnahme 4 herausgezogen werden kann. Gleichzeitig wird dadurch aber die Verschwenkbarkeit um die Längsachse des Tragarmes 2 sichergestellt.

Am axialen Ende der Tragarmaufnahme 4 kann weiters ein axialer Anschlag 10, z.B. in Form einer radial nach innen vorspringenden Schulter, angeordnet sein, um zu verhindern, dass der Tragarm 2 zu tief in die Tragarmaufnahme 4 geschoben werden kann, bzw. um eine definierte Position für den Gehäusering 5 und Tragarmring 6 am Tragarm 2 zu schaffen.

Ebenso kann in der Tragarmaufnahme 4, bevorzugt im Bereich des axialen Endes der Tragarmaufnahme 4 zwischen Schulter 9 und Anschlag 10, eine Umfangsnut 11 vorgesehen sein, in der ein Dichtring 12 zur Abdichtung zwischen Tragarm 2 und Tragarmaufnahme 4 angeordnet werden kann, um zu verhindern, dass Schmutz oder ein flüssiges Medium entlang des Tragarmes 2 in das Innere des Gehäuses des Bedienfeldes 1 eindringen kann. Ebenso kann radial außen am Gehäusering 5 eine Umfangsnut 13 vorgesehen sein, in die ebenfalls ein Dichtring zur Abdichtung zwischen Gehäusering 5 und Tragarmaufnahme 4 angeordnet werden kann.

Der Tragarmring 6 kann mit einer axial vorspringenden Nase 14 ausgeführt sein, wobei die Nase 14 der Schulter 9 zugewandt ist. An der Schulter 9 kann dazu eine axiale, sich in Umfangsrichtung erstreckende Ausnehmung 15 vorgesehen sein, in die die Nase 14 eingreift. Damit kann über die Umfangslänge der Ausnehmung 15 der Verschwenkbereich des Bedienfeldes 1 festgelegt werden.

Ebenso kann an der Tragarmaufnahme 4 ein Arretiermittel 16, z.B. in Form einer Schraube, vorgesehen sein, um das Bedienfeld 1 an einer bestimmten Position zu fixieren, z.B. mittels einer Schraube zu klemmen.

## Patentansprüche

1. Tragarmanschluss mit einem Tragarm (2) und einer Tragarmaufnahme (4), in die der Tragarm (2) gesteckt ist und die im bestimmungsgemäßen Einsatz an einem Bauteil angeordnet ist **dadurch gekennzeichnet, dass** am Tragarm (2) ein Gehäusering (5) und ein Tragarmring (6) angeordnet sind, wobei der Gehäusering (5) vom axialen Ende des Tragarmes (2) weiter entfernt als der Tragarmring (6) angeordnet und in der Tragarmaufnahme (4) befestigt ist und der Tragarmring (6) am Tragarm (2) befestigt ist **und dass** in der Tragarmaufnahme (4) eine radial nach innen vorspringende Schulter (9) vorgesehen ist, die einen axialen Anschlag für den Tragarmring (6) ausbildet.

2. Tragarmanschluss nach Anspruch 1, **dadurch gekennzeichnet, dass** am Tragarmring (6) eine axial vorspringende Nase (14) vorgesehen ist, die in eine axiale Ausnehmung (15) an der Schulter (9) eingreift.

3. Tragarmanschluss nach Anspruch 1 oder 2, **dadurch gekennzeichnet, dass** am axialen Ende der Tragarmaufnahme (4) ein axialer Anschlag (10) für den Tragarm (2) vorgesehen ist.

4. Tragarmanschluss nach einem der Ansprüche 1 bis 3, **dadurch gekennzeichnet, dass** in der Tragarmaufnahme (4) eine Umfangsnut (11) zur Aufnahme eines Dichtringes (12) vorgesehen ist.

5. Tragarmanschluss nach einem der Ansprüche 1 bis 4, **dadurch gekennzeichnet, dass** im Gehäusering (5) eine Umfangsnut (13) zur Aufnahme eines Dichtringes vorgesehen ist.

6. Tragarmanschluss nach einem der Ansprüche 1 bis 5, **dadurch gekennzeichnet, dass** an der Tragarmaufnahme (4) ein Arretiermittel (16) zur Lagefixierung des Tragarmes (2) in der Tragarmaufnahme (4) vorgesehen ist.

## Claims

1. A support arm connection with a support arm (2) and a support arm holder (4) in which the support arm (2) is inserted and which is disposed on a component when used as intended, **characterized in that** a housing ring (5) and a support arm ring (6) are disposed on the support arm (2), the housing ring (5) being disposed further away from the axial end of the support arm (2) than the support arm ring (6) and being attached in the support arm holder (4), and the support arm ring (6) being attached to the support arm (2), **and that** a radially inwardly protruding shoulder (9), which forms an axial stop for the support arm ring (6) is provided in the support arm holder (4).

2. The support arm connection according to claim 1, **characterized in that** an axially protruding nose (14) is provided on the support arm ring (6), an axial recess (15) on the shoulder (9) engaging in the nose.

3. The support arm connection according to claim 1 or 2, **characterized in that** an axial stop (10) for the support arm (2) is provided at the axial end of the support arm holder (4).

4. A support arm connection according to any one of claims 1 to 3, **characterized in that** a circumferential groove (11) for receiving a sealing ring (12) is provided in the support arm holder (4).

5. A support arm connection according to any one of claims 1 to 4, **characterized in that** a circumferential groove (13) for receiving a sealing ring is provided in the housing ring (5).

6. A support arm connection according to any one of claims 1 to 5, **characterized in that** a locking means (16) for fixing the position of the support arm (2) in the support arm holder (4) is provided on the support arm holder (4).

## Revendications

1. Raccordement de bras support comportant un bras support (2) et un réceptacle de bras support (4) dans lequel le bras support (2) est inséré et qui est disposé de manière conforme à l'utilisation prévue au niveau d'un composant, **caractérisé en ce qu'**une bague de boîtier (5) et une bague de bras support (6) sont disposés au niveau du bras support (2), la bague de boîtier (5) étant disposée de manière plus éloignée de l'extrémité axiale du bras support (2) que la bague de bras support (6) et étant fixée dans le réceptacle de bras support (4) et la bague de bras support (6) étant fixée au bras support (2), **et en ce qu'**il est prévu dans le réceptacle de bras support (4) un épaulement (9) faisant saillie radialement vers l'intérieur, qui forme une butée axiale pour la bague de bras support (6).

2. Raccord de bras support selon la revendication 1, **caractérisé en ce qu'il** est prévu, au niveau de la bague de bras support (6), un nez (14) faisant saillie axialement qui s'encliquète dans un évidement axial (15) ménagé au niveau de l'épaulement (9).

3. Raccord de bras support selon la revendication 1 ou 2, **caractérisé en ce qu'il** est prévu, à l'extrémité axiale du réceptacle du bras support (4), une butée axiale (10) destinée au bras support (2).

4. Raccord de bras support selon l'une des revendications 1 à 3, **caractérisé en ce qu'**il est prévu, dans le réceptacle de bras support (4), une rainure circonférentielle (11) destinée à recevoir une bague d'étanchéité (12).

5. Raccord de bras support selon l'une des revendications 1 à 4, **caractérisé en ce qu'**il est prévu, dans la bague de boîtier (5), une bague circonférentielle (13) destinée à recevoir une bague d'étanchéité.

6. Raccord de bras support selon l'une des revendications 1 à 5, **caractérisé en ce qu'**il est prévu, au niveau du réceptacle de bras support (4), un moyen d'arrêt (16) destiné à fixer la position du bras support (2) dans le réceptacle de bras support (4).
